# EUROPÄISCHE PATENTSCHRIFT

(11) **EP 0 523 497 B1**
(45) Veröffentlichungstag und Bekanntmachung des Hinweises auf die Patenterteilung: **26.02.1997**
(21) Anmeldenummer: 92111421.1
(22) Anmeldetag: 06.07.1992
(51) Int. Cl.: F21M 7/00, C08L 33/26, C08K 3/00

(54) **Hochtemperaturbeständiges Lampengehäuse und thermoplastische Kunststoff-Formmasse zu seiner Herstellung**
High temperature resistant lamp housing and thermoplastic material composition for its manufacture
Corps de lampe résistant aux températures élevées et composition thermoplastique de moulage pour sa fabrication

(30) Priorität: 13.07.1991 DE 9108645 U
(43) Veröffentlichungstag der Anmeldung: 20.01.1993
(73) Patentinhaber: Röhm GmbH, 64293 Darmstadt (DE)
(72) Erfinder: Höss, Werner, W-6056 Heusenstamm (DE); Schikowsky, Hartmut, W-6100 Darmstadt (DE)

(56) Entgegenhaltungen:
- DE-C- 2 652 118
- US-A- 4 908 402
- DATABASE WPI Week 9118, Derwent Publications Ltd., London, GB; AN 91-129637 & JP-A-03 069 541 (MITSUBISHI RAYON KK) 25. Maerz 1991
- DATABASE WPI Week 9050, Derwent Publications Ltd., London, GB; AN 90-371447 & JP-A-02 267 801 (MITSUBISHI RAYON KK) 1. November 1990
- DATABASE WPI Week 9106, Derwent Publications Ltd., London, GB; AN 91-039821 & JP-A-02 306 501 (MITSUBISHI RAYON KK) 19. Dezember 1990

## Beschreibung

Die Erfindung betrifft ein hoch temperaturbeständiges Lampengehäuse, insbesondere für Kraftfahrzeuge, sowie eine thermoplastische Kunststoff-Formmasse zur seiner Herstellung.

Für die Scheinwerfer und Signalleuchten von Kraftfahrzeugen werden Lampengehäuse von kompakter Bauweise benötigt, in denen die Lampe der Gehäusewandung nahekommt, so daß sie bei Verwendung üblicher Glühlampen im Gebrauch auf hohe Temperaturen erhitzt werden. Das gilt besonders für die Frontscheinwerfer von Kraftfahrzeugen, vor allem wenn sie mit Halogenlampen ausgerüstet sind. In der Regel besteht ein solches Gehäuse aus einer klaren, gegebenenfalls transparent eingefärbten Streuscheibe und einem Reflektor. Aus Rationalisierungsgründen wird es angestrebt, beide Teile aus thermoplastischem Kunststoff anzufertigen und fest miteinander zu verkleben oder zu verschweißen.

### Stand der Technik

Aus einer Firmenschrift über Polymethacrylalkylimid-Kunststoffe ("PLEXIMID" R, Röhm GmbH) ist es bekannt, Scheinwerfer-Streuscheiben und Reflektoren aus solchen Kunststoffen herzustellen. Sie eignen sich für diesen Zweck wegen ihrer in weiten Grenzen von etwa 130 bis 170°C wählbaren Wärmeformbeständigkeit, ihrer Klarheit, Kratzfestigkeit und Witterungsbeständigkeit.

Nach EP-A 332 122 werden Scheinwerfer-Reflektoren durch Spritzgießen aus thermoplastischen Polyphenylensulfid-Formmassen mit einem Gehalt an elektrisch leitenden Füllstoffen erzeugt. Dieser Zusatz soll die elektrostatische Lackierung mit einem Pulverharz erleichtern, das einen hochglänzenden, für die Metallisierung geeigneten Überzug ergibt. Gefüllte Polyphenylensulfid-Formkörper sind bis 230°C formbeständig und vertragen Dauergebrauchstemperaturen bis 170°C.

Aus dem Derwent-Referat Nr. 91-129637 (zu JP-A 03-069 541) ist eine künstliche Marmormasse bekannt, die aus 15-40 % Polymethacrylimid, 15-40 % Silicon-diamin und 20-70 % eines anorganischen Füllstoffes, z.B. Talkum, besteht. Die Eigenschaften der Matrix werden durch den Gehalt an Silicon-diamin wesentlich beeinflußt. Über die thermischen Dehnungseigenschaften des Materials ist nichts bekannt.

Aus DE-C 26 52 118 ist eine Polymethacrylimid-Formmasse mit Aluminiumoxidtrihydrat bekannt, die gemeinsam mit einem chemischen Treibmittel Massen von geringer Dichte ergeben soll.

Die Reflektoren werden auf der Innenseite durch Bedampfen mit Aluminium metallisiert. Um gute Reflexionseigenschaften zu gewährleisten, wird gefordert, daß sich der Reflektor beim Erhitzen durch die Lampe nicht infolge der thermischen Ausdehnung bis zu einer Störung der Spiegelgeometrie verzieht. Außerdem muß die zu metallisierende Reflektorfläche vollkommen glatt sein und die metallisierte Fläche auch im längeren Gebrauch ihre spiegelnde Glätte beibehalten. Diese Forderungen werden von Reflektoren aus Polymethacrylimid-Kunststoffen nicht immer in befriedigenden Ausmaß erfüllt. Es wird beobachtet, daß die aufgedampfte Metallschicht trüb, rissig bis blasig wird oder abblättert. In diesem Fall muß das ganze Lampengehäuse ersetzt werden.

Nach Untersuchungen der Erfinder ist die mangelnde Haltbarkeit der Metallisierung vermutlich auf das unterschiedliche Wärmedehnungsverhalten des Kunststoffes und der Metallschicht zurückzuführen. Wenn der Reflektor durch die brennende Glühlampe erhitzt wird, dehnt sich die Kunststoffwandung stärker als die Metallschicht, was nach häufigen Temperaturwechseln zur Ablösung der Metallschicht führen kann.

### Aufgabe und Lösung

Dieser Mangel soll durch die Erfindung beseitigt werden. Ziel der Erfindung ist ein thermoplastischer Kunststoff mit einem niedrigen thermischen Längenausdehnungskoeffizienten, der zu spritzgegossenen Formteilen mit einer optisch hochwertigen Oberfläche formbar ist. Dies wird erfindungsgemäß durch eine thermoplastische Kunststoff-Formmasse mit einer Matrix aus thermoplastischem Polymethacrylimid-Kunststoff und bestimmten darin verteilten pulverförmigen anorganischen Füllstoffen, nämlich Kreide, Kaolin oder Talkum, erreicht. Sie hat einen deutlich verminderten thermischen Längenausdehnungskoeffizienten, wie aus folgender Tabelle hervorgeht, der ein thermoplastischer Kunststoff mit 86 Gew.-% Methacrylmethylimid-, 7 Gew.-% Methylmethacrylat- und 7 Gew.-% Methacrylsäure- bzw. -anhydrid-Einheiten zugrundeliegt:

| Kunststoff | thermischer Längenausdehnungskoeffizient nach DIN 53 752 [K⁻¹] |
|---|---|
| Polymethacryl-methylimid | 50 x 10⁻⁶ |
| dito mit 20 Gew.-% Talkum | 27 x 10⁻⁶ |
| dito mit 40 Gew.-% Talkum | 17 x 10⁻⁶ |
| Talkum | 8 x 10⁻⁶ |

Weiterhin wird angestrebt, Lampengehäuse so aufzubauen, daß der verwendete Kunststoff leicht wiederverwertbar ist.

Gegenstand der Erfindung ist daher eine thermoplastische Kunststoff-Formmasse zur Herstellung von hoch temperaturbeständigen Lampengehäusen, gekennzeichnet durch eine Matrix aus thermoplastischem Polymethacrylimid-Kunststoff und einem darin verteilten pulverförmigen anorganischen Füllstoff.

Weiterhin ist Gegenstand der Erfindung ein hoch temperaturbeständiges Lampengehäuse, das wenigstens zum Teil aus einer solchen thermoplastischen Kunststoff-Formmasse besteht.

Es versteht sich, daß die erfindungsgemäße Formmasse auch zur Herstellung anderer Formkörper als Lampengehäuse verwendet werden kann, wenn an ihre Eigenschaften ähnliche Forderungen gestellt werden. Das gilt für Formkörper aller Art mit Überzügen, deren thermischer Längenausdehnungskoeffizient deutlich von dem des Kunststoffes abweicht. Das trifft für alle Metallüberzüge, aber auch für Silikatschichten oder hochvernetzte organische oder metallorganische Polymerschichten zu. Die Formmasse eignet sich auch zur Herstellung von Spritzgußteilen mit umspritzten Einlageteilen aus Metall oder Keramik.

Das geforderte Eigenschaftsbild der erfindungsgemäßen Formmasse umfaßt eine leichte Verarbeitbarkeit auf Spritzgießmaschinen, die Ausbildung einer einwandfrei glatten Oberfläche mittels Formwerkzeugen mit entsprechend geglätteter Oberfläche, sowie die Verschweißbarkeit mit klaren Polymethacrylimid-Kunststoffen. Die Oberfläche soll entweder unmittelbar oder nach einer Glanzlackierung zur Metallisierung geeignet sein.

Ein gespritzter, metallisierter Reflektor kann mit einer Streuscheibe aus transparenter, gegebenenfalls transparent eingefärbter Polymethacrylimid-Formmasse zu einem kompletten Lampengehäuse verschweißt werden. Solche Lampengehäuse bieten den besonderen Vorteil, daß sie sich nach dem Ende ihrer Lebensdauer wieder zur Herstellung der erfindungsgemäßen Formmasse mitverwenden lassen. Der Anteil an klarer Formmasse kann durch Zusatz einer entsprechenden Füllstoffmenge ausgeglichen werden. Die Reste der Metallbeschichtung stören nicht, sondern werden als Füllstoff mitverarbeitet.

### Ausführung der Erfindung

Polymethacrylimid-Kunststoffe sind bekannt. Sie sind z.B. gemäß DE-C 26 52 118 durch Umsetzung von Polymethylmethacrylat mit primären Aminen herstellbar. Typische Kunststoffe dieser Art sind zu wenigstens 40 Gew.-% aus Einheiten der Formel 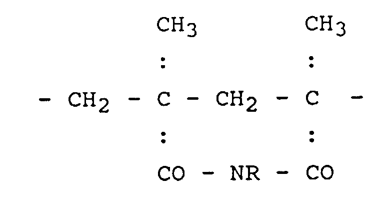 aufgebaut, worin R ein Wasserstoffatom oder ein Alkylrest, insbesondere mit 1 bis 8 C-Atomen, ist. Vorzugsweise ist R ein Methyl-, Ethyl-, n-Propyl- oder n-Butylrest oder gegebenenfalls ein Gemisch aus diesen. Die Polymethacrylalkylimid-Polymeren haben folgende Glasübergangstemperaturen:

| | |
|---|---|
| Polymethacryl-methylimid | 185°C |
| Polymethacryl-ethylimid | 164°C |
| Polymethacryl-n-propylimid | 137°C |
| Polymethacryl-n-butylimid | 121°C |

Eine wichtige Klasse von Polymethacrylalkylimid-Polymeren ist aus
30 bis 96 Gew.-% Einheiten des Methacryl-methylimids
70 bis 0 Gew.-% Einheiten des Methylmethacrylats
0 bis 10 Gew.-% Einheiten von Methacrylsäure (od. -anhydrid
aufgebaut. Ihre Vicat-Temperaturen (VST-B, DIN 53 460) liegen im Bereich von 130 bis 170°C.

Das Molekulargewicht des verwendeten Polymethacrylimids liegt in einem Bereich, der eine formgebende Verarbeitung im thermoplastischen Zustand ermöglicht; vorzugsweise im Bereich von 40 000 bis 200 000, insbesondere 60 000 bis 150 000 Dalton (Gewichtsmittelwerte). Die Verarbeitungs-Temperatur liegt im Durchschnitt um etwa 40°C höher als bei PMMA, d.h. im Bereich von 280 bis 340°C.

Polymethacrylimid-Kunststoffe mit Faserzusätzen, wie Glas- oder Kohlefasern, sind bekannt; vgl. Röhm-Firmenschrift "PLEXIMID" ^{R} . Sie haben einen extrem hohen E-Modul, sind jedoch wegen ihrer Oberflächenbeschaffenheit zur Herstellung von glattwandigen Lampengehäusen nicht geeignet. Im Gegensatz dazu zeichnen sich die erfindungsgemäßen thermoplastischen Kunststoff-Formmassen durch einen Gehalt an einem - vor der Verarbeitung - pulverförmigen anorganischen Füllstoff aus. Darunter werden Füllstoffe verstanden, deren Teilchen eine Größe unter 100, vorzugsweise unter 20 Mikrometer haben. Die Teilchen können körnig oder blättchenförmig sein; ihr Längen/Dicken-Verhältnis liegt unter 10.

Unter den erfindungsgemäß eingesetzten anorganischen Füllstoffen sind Kaolin und besonders Talkum bevorzugt. Ein zusätzlicher Gehalt an faserförmigen Füllstoffen kann in manchen Fällen ohne Nachteil für die Oberflächeneigenschaften mitverwendet werden. Die Fasern sollen jedoch nicht länger als 4 mm, vorzugsweise <1 mm sein. Gewünschtenfalls können Farbpigmente gleichzeitig zugesetzt werden.

Der Anteil der anorganischen Füllstoffe wird so hoch gewählt, daß die durch den hohen thermischen Ausdehnungskoeffizienten des reinen Polymethacrylimid-Polymeren hervorgerufenen Probleme nicht oder nicht in einem störenden Ausmaß auftreten. Vorzugsweise liegt der thermische Ausdehnungskoeffizient der Formmasse unter 30 x 10⁻⁶ K⁻¹, insbesondere 10 bis 25 x 10⁻⁶ K⁻¹. Werte in diesem Bereich werden bei Füllstoffgehalten von 15 bis 70 Gew.-%, insbesondere 20 bis 50 Gew.-% erreicht.

Der Füllstoff ist in der Formmasse in der Weise verteilt, daß der Kunststoffanteil eine zusammenhängende Matrix bildet. Die Füllstoffteilchen sollen möglichst jeweils von der Kunststoffmatrix vollkommen umschlossen werden. Das wird durch eine gute Benetzbarkeit der Füllstoffoberfläche erleichtert. Die Benetzbarkeit der Füllstoffe kann durch Haftmittel verbessert werden. Als Haftmittel eignen sich Stoffe, deren polarer Charakter zwischen denen des anorganischen Füllstoffes und des Kunststoffes liegt, so daß sie eine Affinität zu beiden Stoffen haben. Beispiele geeigneter Haftmittel sind Organosilane, wie Vinylsilane, modifizierte oder unmodifizierte Aminosilane und Epoxysilane, sowie aliphatische Carbonsäuren mit 2 bis 8 Kohlenstoffatomen im Molekül, wie Bernsteinsäure. Überzugsmengen von 0,2 - 3 Gew.-%, bezogen auf das Füllstoffgewicht, sind in der Regel ausreichend.

Der Füllstoff wird zweckmäßig mit dem schmelzflüssigen Kunststoff mittels eines Ein- oder Mehrschneckenextruders gleichmäßig vermischt und die Formmassenschmelze, sofern sie nicht unmittelbar zur Herstellung geformter Kunststoffkörper verwendet wird, strangförmig extrudiert, gekühlt und zu einem Granulat geschnitten. Dieses kann dann in an sich bekannter Weise, vorzugsweise nach dem Spritzgußverfahren, zu Lampengehäusen, Teilen davon oder zu anderen Formkörpern verarbeitet werden. Es versteht sich, daß zur Herstellung optisch hochwertiger Oberflächen entsprechend polierte Werkzeuge verwendet werden müssen. Die beim Spritzgießen erhaltenen Formteile können glanzlackiert oder gegebenenfalls ohne weitere Nachbehandlung der Oberfläche durch Vakuumbedampfung mit Aluminium metallisiert werden. Ebenso kann man andere Überzüge von geringer Dehnungsfähigkeit und niedrigem thermischem Ausdehnungskoeffizienten aufbringen, wie Kieselglasschichten oder hochvernetzte Schichten organischer Polymerer. Diese Beschichtungen erweisen sich als beständig haftend, wenn sie häufig wechselnden Beanspruchungen durch hohe, der Wärmeformbeständigkeit nahe kommende Erwärmung ausgesetzt werden.

Die unbeschichtete Oberfläche von Formkörpern aus der erfindungsgemäßen Formmasse läßt sich leicht mit passenden Formkörpern aus transparentem Polymethacrylimid-Kunststoff verbinden, vorzugsweise verschweißen. Beispielsweise kann ein Scheinwerfer-Reflektor mit einer glasklaren, gegebenenfalls transparent eingefärbtein Scheinwerfer-Streuscheibe verschweißt werden. Dabei empfiehlt es sich, dem unterschiedlichen Wärmeausdehnungsverhalten des gefüllten und des ungefüllten Kunststoffes konstruktiv Rechnung zu tragen. Auf die Möglichkeiten der Wiederverwertung solcher Verbundteile wurde oben schon eingegangen.

## Patentansprüche

1. Thermoplastische Kunststoff-Formmasse zur Herstellung von hoch temperaturbeständigen Lampengehäusen, deren Matrix aus thermoplastischem Polymethacrylimid-Kunststoff besteht, mit einem Gehalt an einem darin verteilten pulverförmigen anorganischen Füllstoff, dadurch gekennzeichnet, daß sie als pulverförmigen anorganischen Füllstoff Kreide, Kaolin oder Talkum enthält.

2. Thermoplastische Kunststoff-Formmasse nach Anspruch 1, dadurch gekennzeichnet, daß der Polymethacrylimid-Kunststoff zu wenigstens 30 Gew.-% aus Einheiten der Formel 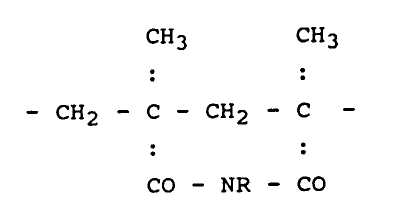 aufgebaut ist, worin R ein Wasserstoffatom oder ein Alkylrest ist.

3. Thermoplastische Kunststoff-Formmasse nach Anspruch 1 oder 2, dadurch gekennzeichnet, daß der anorganische Füllstoff mit einem Haftmittel überzogen ist.

4. Thermoplastische Kunststoff-Formmasse nach einem oder mehreren der Ansprüche 1 bis 3, gekennzeichnet durch einen linearen thermischen Ausdehnungskoeffizienten <30 x 10⁻⁶ K⁻¹.

5. Hoch temperaturbeständiges Lampengehäuse, dadurch gekennzeichnet, daß es wenigstens zum Teil aus der thermoplastischen Kunststoff-Formmasse nach einem oder mehreren der Ansprüche 1 bis 4 besteht.

6. Hoch temperaturbeständiges Lampengehäuse nach Anspruch 5, dadurch gekennzeichnet, daß es auf der Innenseite wenigstens teilweise metallisiert ist.

7. Hoch temperaturbeständiges Lampengehäuse nach Anspruch 5 oder 6, dadurch gekennzeichnet, daß es eine Streuscheibe aus klarem Polymethacrylimid-Kunststoff enthält.

8. Hoch temperaturbeständiges Lampengehäuse nach Anspruch 7, dadurch gekennzeichnet, daß es mit der Streuscheibe verschweißt ist.

9. Hoch temperaturbeständiges Lampengehäuse nach einem oder mehreren der Ansprüche 5 bis 8, dadurch gekennzeichnet, daß wenigstens ein Teil des Polymethacrylimid-Kunststoffes aus rückgewonnenem Kunststoffmaterial eines Lampengehäuses nach Anspruch 5 bis 8 besteht.

## Claims

1. A thermoplastic moulding compound for producing highly temperature-resistant lamp housings, comprising a matrix which is made of thermoplastic polymethacrylimide material and a powdery inorganic filler distributed therein, characterised in that the powdery inorganic filler is chalk, kaolin or talc.

2. A thermoplastic moulding compound according to claim 1, characterised in that the polymethacrylimide plastic material is synthesised from at least 30 wt.% of units of formula 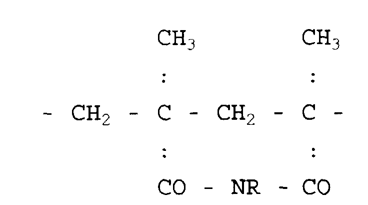 wherein R is a hydrogen atom or an alkyl group.

3. A thermoplastic moulding compound according to claim 1 or 2, characterised in that the inorganic filler is coated with an adhesive.

4. A thermoplastic moulding compound according to one or more of claims 1 to 3, characterised by a linear thermal expansion coefficient of <30 x 10⁻⁶ K⁻¹.

5. A highly temperature-resistant lamp housing, characterised in that it is made, at least in part, of a thermoplastic moulding compound according to one or more of claims 1 to 4.

6. A highly temperature-resistant lamp housing according to claim 5, characterised in that at least part of the inside is metallised.

7. A highly temperature-resistant lamp housing according to claim 5 or 6, characterised in that it comprises a diffusion screen made of clear polymethacrylimide plastic material.

8. A highly temperature-resistant lamp housing according to claim 7, characterised in that it is welded to the diffusion screen.

9. A highly temperature-resistant lamp housing according to one or more of claims 5 to 8, characterised in that at least a part of the polymethacrylimide plastic material consists of recycled plastic material of lamp housings according to claims 5 to 8.

## Revendications

1. Masse à mouler de matière thermoplastique pour la fabrication de boîtiers de lampe très stables à la température, dont la matrice est faite de matière thermoplastique de polyméthacrylimide contenant une charge inorganique pulvérulente qui y est répartie, caractérisée en ce qu'elle contient, en tant que charge inorganique pulvérulente, de la craie, du kaolin ou du talc.

2. Masse à mouler de matière thermoplastique selon la revendication 1, caractérisée en ce que la matière plastique de polyméthacrylimide se compose, pour 30% en poids au moins, de motifs de formule 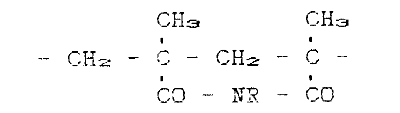 dans laquelle R est un atome d' hydrogène ou un reste alkyle.

3. Masse à mouler de matière thermoplastique selon la revendication 1 ou 2, caractérisée en ce que la charge inorganique est revêtue d'un agent d'adhérence.

4. Masse à mouler de matière thermoplastique selon l'une quelconque des revendications 1 à 3, caractérisée par un coefficient de dilatation thermique linéaire inférieur à 30 x 10⁻⁶ K⁻¹.

5. Boîtier de lampe très stable à la température caractérisé en ce qu'il est fait, au moins en partie, de la masse à mouler de matière thermoplastique selon l'une quelconque des revendications 1 à 4.

6. Boîtier de lampe très stable à la température selon la revendication 5, caractérisé en ce qu'il est métallisé au moins partiellement du côté intérieur.

7. Boîtier de lampe très stable à la température selon la revendication 5 ou 6, caractérisé en ce qu'il contient un diffuseur en matière plastique de polyméthacrylimide transparente.

8. Boîtier de lampe très stable à la température selon la revendication 7, caractérisé en ce qu'il est soudé au diffuseur.

9. Boîtier de lampe très stable à la température selon l'une quelconque des revendications 5 à 8, caractérisé en ce qu'une partie au moins de la matière plastique de polyméthacrylimide est constituée par de la matière plastique récupérée d'un boîtier de lampe selon l'une quelconque des revendications 5 à 8.
